# EUROPÄISCHE PATENTSCHRIFT

(11) **EP 0 918 657 B1**
(45) Veröffentlichungstag und Bekanntmachung des Hinweises auf die Patenterteilung: **10.08.2005**
(21) Anmeldenummer: 98933492.5
(22) Anmeldetag: 09.05.1998
(51) Int. Cl.: B60K 41/02, F16D 48/08, F16D 103/02

(54) **SYSTEM ZUR GEMEINSAMEN STEUERUNG EINER SERVOKUPPLUNG UND EINES FAHRZEUGMOTORS**
SYSTEM FOR COMBINED CONTROL OF A SERVO CLUTCH AND THE ENGINE OF A MOTOR VEHICLE
SYSTEME DE REGULATION COMMUNE D'UN SERVO-EMBRAYAGE ET D'UN MOTEUR DE VEHICULE

(30) Priorität: 20.06.1997 DE 19726214
(43) Veröffentlichungstag der Anmeldung: 02.06.1999
(73) Patentinhaber: ROBERT BOSCH GMBH, 70442 Stuttgart (DE)
(72) Erfinder: LOEFFLER, Juergen, D-71364 Winnenden (DE); BOLZ, Martin-Peter, D-71720 Oberstenfeld (DE); HUELSER, Holger, D-70329 Stuttgart (DE)
(86) Internationale Anmeldenummer: PCT/DE1998/001298
(87) Internationale Veröffentlichungsnummer: WO 1998/058814

(56) Entgegenhaltungen:
- WO-A-95/22013
- DE-A- 3 709 388
- FR-A- 2 645 805
- GB-A- 2 158 912

## Beschreibung

### Stand der Technik

Die Erfindung betrifft ein System zur gemeinsamen Steuerung einer im Antriebsstrang eines Kraftfahrzeugs angeordneten Servokupplung und eines im Antriebsstrang angeordneten Fahrzeugmotors mit den Merkmalen des Anspruchs 1.

Automatische Kupplungen beziehungsweise Servokupplungen sind beispielsweise bekannt aus "Kraftfahrzeugtechnisches Taschenbuch, 21. Auflage, 1991, Seiten 538 - 539". Servokupplungen bieten in Verbindung mit elektronischen Steuergeräten entweder einen automatisierten Anfahrvorgang oder, zusammen mit servobetätigten Schaltgetrieben, ein vollautomatisches Getriebe. Bei Kraftfahrzeugen mit einem solchen elekronischen Kupplungsmanagement muß insbesondere für den Anfahrvorgang des Fahrzeugs eine spezielle Ansteuerungsstrategie hinterlegt werden.

Weiterhin sind beispielsweise aus "Kraftfahrzeugtechnisches Taschenbuch, 21. Auflage, 1991, Seiten 467 - 468" sogenannte elektronische Motorleistungssteuerungssysteme bekannt. Im Gegensatz zu den bisher überwiegend üblichen direkten mechanischen Verstellungen der Drosselklappe mittels des vom Fahrer betätigbaren Fahrpedals wird bei solchen Systemen die Drosselklappe über ein elektronisches Steuergerät elektromotorisch verstellt. Bei solchen Systemen gibt der Fahrer über das Fahrpedal im allgemeinen die Motorleistung oder das Motormoment bzw. die Antriebsleistung oder das Antriebsmoment des gesamten Fahrzeugs vor.

Die DE 37 09 388 A1 zeigt eine Fahrzeug-Bedien- und Fahrtregeleinrichtung für ein mit einem Automatikgetriebe ausgerüstetes Fahrzeug mit einer Tempostat-Funktion (Einhalten einer nahezu konstanten Fahrzeuglängsgeschwindigkeit). Während der Aktivierung der Tempostat-Funktion kann der Fahrer das Fahrzeug durch Niederdrücken des Fahrpedals beschleunigen.

Aus der US 4 817 776 ist ein System zur gemeinsamen Steuerung einer Kupplung und eines Fahrzeugmotors bekannt, bei dem die erfasste Stellung des Fahrpedals die Geschwindigkeit des Fahrzeugs vorgibt und eine den Schlupf der Kupplung repräsentierende Größe berücksichtigt wird.

Aus der FR 2 645 805 A ist ein Verfahren zum Steuern einer zwischen einer Antriebsmaschine und einem Getriebe wirksamen automatisierten Reibungskupplung bekannt, bei dem für den Anfahrvorgang ein Regeleingriffspunkt der Kupplung in Abhängigkeit einer Momenten- oder Winkelerfassung ermittelt wird, indem die Kupplung bei eingelegtem Gang mit definierter Geschwindigkeit bis zu einer Position geschlossen wird, bei der zwar ein Moment eingeleitet wird, das Fahrzeug jedoch nicht bewegt wird, und die Kupplung anschließend wieder geöffnet wird.

Die Aufgabe der vorliegenden Erfindung besteht in dem Entwurf einer optimalen Fahrzeugsteuerung während des Anfahrvorgangs.

Diese Aufgabe wird durch die Merkmale des Anspruchs 1 gelöst.

### Vorteile der Erfindung

Wie erwähnt, betrifft die Erfindung ein System zur gemeinsamen Steuerung einer Servokupplung und eines Fahrzeugmotors. Sowohl die Servokupplung als auch der Fahrzeugmotor sind im Antriebsstrang des Kraftfahrzeugs angeordnet. Bei Vorliegen eines vorgebbaren Betriebszustands, insbesondere im Bereich niedriger Fahrzeuggeschwindigkeiten, wie sie beispielsweise im Anfahrbereich auftreten, werden die Servokupplung und der Fahrzeugmotor derart gesteuert, daß die Stellung des Fahrpedals die Beschleunigung oder die Geschwindigkeit des Fahrzeugs vorgibt.

Während erfindungsgemäß außerhalb des Anfahrvorgangs die Steuerung des Antriebsstrangs abhängig von der Stellung des Fahrpedals leistungs- oder momentenskaliert arbeitet, soll erfindungsgemäß während des Anfahrvorgangs das Fahrpedal als Beschleunigungs- beziehungsweise als Geschwindigkeitspedal skaliert werden. Durch die erfindungsgemäße Interpretation des Fahrerwunsches lassen sich alle Antriebsstrangkomponenten, insbesondere die Servokupplung und der Fahrzeugmotor, frei im Rahmen ihrer Möglichkeiten einsetzen. Die erfindungsgemäße Strategie verwendet alle Komponenten eines koordinierten Antriebsstrangmanagements zum Anfahren, um den höchstmöglichen Anfahrkomfort zu erreichen. Die Ansteuerung des Fahrzeugmotors und der Fahrzeugkupplung wird erfindungsgemäß so koordiniert, daß eine dem Fahrerwunsch entsprechende Beschleunigung beziehungsweise Fahrzeuggeschwindigkeit erreicht wird.

Durch die Interpretation des Fahrpedals beim Anfahren als Beschleunigungs- beziehungsweise Geschwindigkeitspedal wird sichergestellt, daß das Verhalten des Fahrzeugs beim Anfahren für alle Lastsituationen (beispielsweise Bergauffahrt, Bergabfahrt, Anhängerbetrieb) gleich ist.

In einer Weiterbildung der Erfindung ist vorgesehen, dass innerhalb der Anfahrsituation zwischen einem Zustand mit rutschender Kupplung, einem Übergangszustand, in dem die Kupplung schließt, und einem Endzustand, indem die Kupplung vollständig geschlossen ist, unterschieden wird. Hierzu kann die Steuerung der Servokupplung und des Fahrzeugmotors, also insbesondere abhängig von einer den Kupplungsschlupf repräsentierenden Größe geschehen. Als eine solche Größe kann entweder der Kupplungsschlupf direkt berechnet werden oder es kann die Drehzahldifferenz zwischen der Kupplungseingangsdrehzahl (Motordrehzahl) und der Kupplungsausgangdrehzahl (Getriebeeingangsdrehzahl) ermittelt werden.

Bei Vorliegen eines größeren Kupplungsschlupfes wird der Fahrzeugmotor derart gesteuert, daß eine von der Stellung des Fahrpedals abhängige Drehzahl des Fahrzeugmotors eingestellt wird. Die Kupplungssteuerung wird dann derart getätigt, daß eine von der Stellung des Fahrpedals abhängige Fahrzeuggeschwindigkeit und/oder Fahrzeugbeschleuniung eingestellt wird.

Bei Vorliegen eines kleineren Kupplungsschlupfes wird die Kupplung vollständig geschlossen, wobei der Fahrzeugmotor kurz vom dem vollständigen Schließen der Kupplung derart gesteuert wird, daß die eingestellte Drehzahl des Fahrzeugmotors erhöht wird. Eine solche leichte Anhebung der Motordrehzahl kurz vor dem Übergang der Kupplung in die Haftreibung, sorgt dafür, daß keine Schwingungsanregungen des Antriebsstrangs erfolgen.

Nach dem vollständigen Schließen der Kupplung wird der Fahrzeugmotor derart gesteuert, daß eine von der Stellung des Fahrpedals abhängige Fahrzeuggeschwindigkeit und/oder Fahrzeugbeschleunigung eingestellt wird. Dies geschieht solange, bis die Anfahrstrategie - wie schon beschrieben - verlassen wird.

Erfindungsgemäß findet also während des Anfahrvorgangs eine möglichst konstante Beschleunigung sowohl bei rutschender als auch bei geschlossener Kupplung statt. Der Übergang zwischen diesen beiden Zuständen ist dadurch relativ unkritisch und verursacht keine starken Änderungen der Beschleunigung. Der Übergang ist somit praktisch ruckfrei. Der Aufwand, um diesen Übergang zu verschleifen, ist gering. Er kann beispielsweise - wie beschrieben - durch ein leichtes Erhöhen der Motordrehzahl kurz vom Übergang der Kupplung in Haftreibung bewerkstelligt werden.

Im Antriebsstrang des Kraftfahrzeugs ist im allgemeinen ein in seiner Übersetzung verstellbares Getriebe angeordnet. In einer vorteilhaften Ausgestaltung der Erfindung ist vorgesehen, daß das Vorliegen des vorgebbaren Betriebszustands dann erkannt wird, wenn eine vorgebbare, insbesondere kurze beziehungsweise niedrige, Getriebeübersetzung eingestellt ist. Dabei ist es vorteilhaft, wenn jede Fahrt des Fahrzeugs im ersten Getriebegang als Anfahrsituation definiert wird, woraufhin erfindungsgemäß die Fahrpedalstellung als Beschleunigungs- beziehungsweise Geschwindigkeitswunsch interpretiert wird.

Eine weitere vorteilhafte Ausgestaltung der Erfindung benutzt eine etwas andere Definition des Anfahrvorgangs, wobei ein solcher Anfahrvorgang dadurch definiert wird, daß die Fahrzeuggeschwindigkeit einen vorgebbaren Schwellwert unterschreitet und die Servokupplung geöffnet oder wenigstens nicht vollständig geschlossen, also teilweise geöffnet, ist. Die Anfahrsituation liegt also dann vor, wenn sich das Fahrzeug mit sehr geringer Geschwindigkeit (beispielsweise

Schrittgeschwindigkeit) bewegt und die Kupplung geöffnet beziehungsweise nicht vollständig geschlossen ist. Die Anfahrsituation kann dann verlassen werden, wenn eine Getriebeschaltung auftritt.

Wie schon erwähnt, geschieht die Antriebsstrangsteuerung im Bereich höherer Fahrzeuggeschwindigkeiten, also außerhalb des Anfahrbereichs, derart, daß die erfaßte Stellung des Fahrpedals das Antriebsmoment beziehungsweise die Antriebsleistung des Fahrzeugmotors oder des gesamten Fahrzeugs vorgibt. Wird der erfindungsgemäße Anfahrmodus gleichzeitig mit einer Umschaltung der Getriebeübersetzung verlassen, so wird ein potentieller Momentenruck im Antriebsstrang des Fahrzeugs bei der Umschaltung der Fahrpedalinterpretation (Umschaltung von der Geschwindigkeits- beziehungsweise Beschleunigungsskalierung zur Momenten- beziehungsweise Leistungsskalierung) vermieden. Wird das Fahrzeug also aus dem Stand heraus beschleunigt, so wird die Fahrpedalstellung bis zur ersten Getriebeumschaltung als Geschwindigkeits- beziehungsweise Beschleunigungsvorgabe interpretiert. Auf diese Weise fällt ein eventuell auftretender Ruck bei der Umschaltung der Fahrpedalinterpretation mit dem im allgemeinen unvermeidlichen Schaltruck während eines Getriebeumschaltvorgangs zusammen. Bei einem Rückschaltvorgang vom zweiten in den ersten Getriebegang, weil beispielsweise das Fahrzeug zu langsam wird, oder weil der Fahrer durch ein starkes Betätigen des Fahrpedals eine Rückschaltung anfordert, oder weil der Fahrer über eine manuelle Vorgabe den ersten Getriebegang wählt, dient das Fahrpedal weiterhin als Momentenvorgabe. Auf diese Weise ist eine Rückschaltung vom zweiten in den ersten Getriebegang ganz analog einer anderen Rückschaltung zu behandeln und erfordert keine Sonderbehandlung. Erst wenn das Fahrzeug (fast) vollständig zum Stillstand kommt und die Kupplung schon, zumindest teilweise, geöffnet ist, tritt wieder eine Anfahrsituation auf und es wird über das Fahrpedal wieder eine Geschwindigkeit beziehungsweise Beschleunigung vorgegeben. So findet auch bei erneutem Betreten einer Anfahrsituation gemäß der letztgenannten Erfindungsvariante kein Momentensprung statt.

In einer weiteren Variante der Erfindung ist vorgesehen, daß die Servokupplung und der Fahrzeugmotor derart gesteuert werden, daß eine ansteigende Geschwindigkeit, insbesondere mit kleinen Beschleunigungsänderungen, erzielt wird. Das bedeutet, daß im Anfahrbereich eine monoton steigende Fahrzeuggeschwindigkeit mit nur geringen Änderungen in der Beschleunigung erreicht wird.

In einer besonders vorteilhaften Ausgestaltung der Erfindung ist vorgesehen, daß bei Vorliegen des vorgebbaren Betriebszustands, also insbesondere während des Anfahrzustands, die Steuerung der Servokupplung derart geschieht, daß die Kupplung nur im Sinne eines Schließens der Kupplung getätigt wird. Durch die fahrpedalabhängige Drehzahlregelung, beispielsweise der Getriebeeingangsdrehzahl, kann es während eines Anfahrvorgangs vorkommen, daß die Kupplung wieder geöffnet wird, wenn beispielsweise die aktuelle Getriebeingangsdrehzahl größer ist als der Vorgabewert. Solch eine Öffnung der Kupplung im Anfahrvorgang kann zu Schwingungen des Antriebsstrangs führen und wird als sehr unkomfortabel empfunden. Aus diesem Grund wird wie oben beschrieben, dafür gesorgt, daß die Kupplung während des Anfahrvorgangs nur weiter geschlossen, aber nicht wieder geöffnet werden kann.

In besonders kritischen Situationen, beispielsweise beim Anfahren am Berg mit hoher Last und zu geringem Motormoment, kann es jedoch zu einem Abwürgen des Motors kommen, wenn die Kupplung zuvor zu schnell geschlossen wurde. Aus diesem Grund ist es vorteilhaft, die Kupplung zu öffnen, wenn die Motordrehzahl eine kritsche Schwelle unterschreitet. Während des Anfahrvorgans wird also die Kupplung nur dann im Sinne eines Öffnens der Kupplung betätigt, wenn die erfaßte Drehzahl des Fahrzeugmotors einen Schwellwert unterschreitet.

In einer weiteren Ausgestaltung der Erfindung ist vorgesehen, daß bei Vorliegen des vorgebbaren Betriebszustands, also insbesondere während eines Anfahrvorgangs, die Steuerung der Servokupplung abhängig von dem Gradienten der Drehzahl des Fahrzeugmotors geschieht. Diese Ausgestaltung mildert insbesondere die störenden Drehzahländerungen des Motors im Anfahrvorgang ab.

Weiterhin kann vorgesehen sein, daß während des Anfahrvorgangs die Steuerung der Servokupplung derart geschieht, daß die Kupplung nur dann im Sinne eines Schließens betätigt wird, wenn die Motordrehzahl einen Schwellwert überschreitet. Insbesondere ist dabei vorgesehen, daß dieser Schwellwert abhängig von der erfaßten Fahrpedalstellung ist. Das Schließen der Kupplung wird also gemäß dieser Ausgestaltung erst dann begonnen, wenn der Motor eine gewisse Mindestdrehzahl erreicht hat. Dies ermöglicht ein zügiges Anfahren des Fahrzeugs, da der Motor in der Regel bei seiner Leerlaufdrehzahl nur ein sehr geringes Moment zur Verfügung stellen kann, das kein zügiges Anfahren erlaubt.

Weitere vorteilhafte Ausgestaltungen sind den Unteransprüchen zu entnehmen.

### Zeichnung

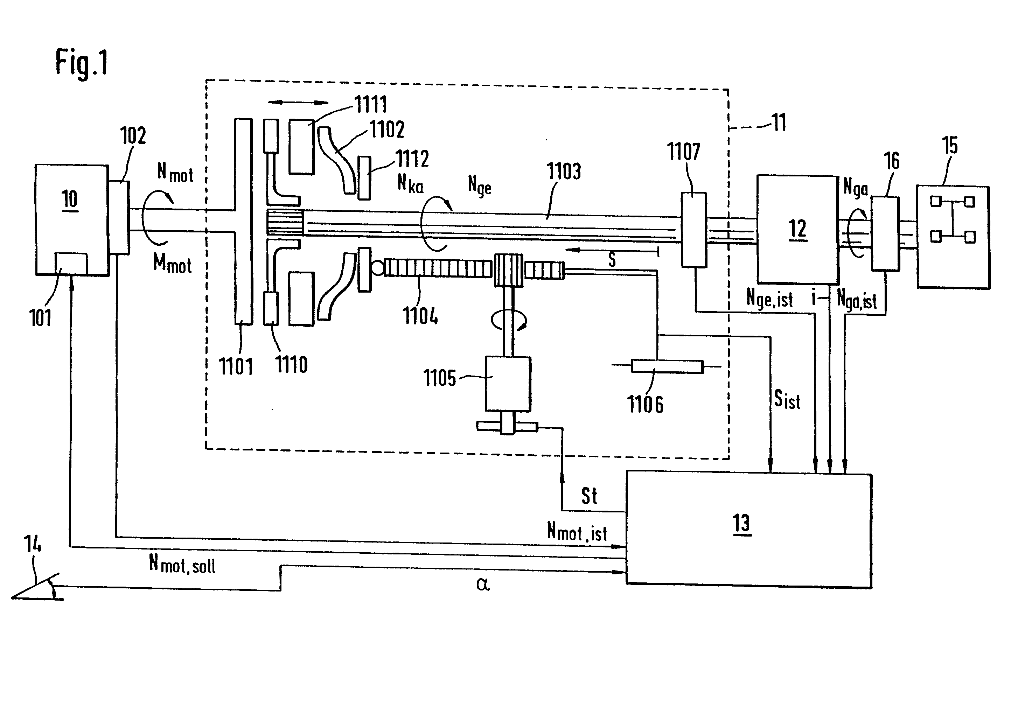

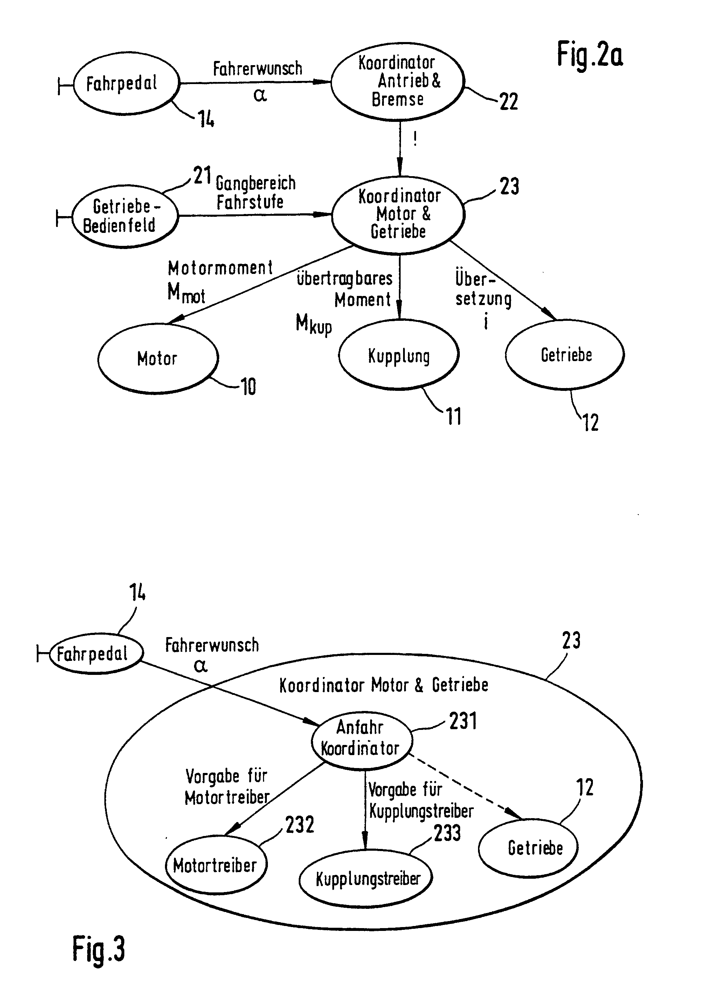

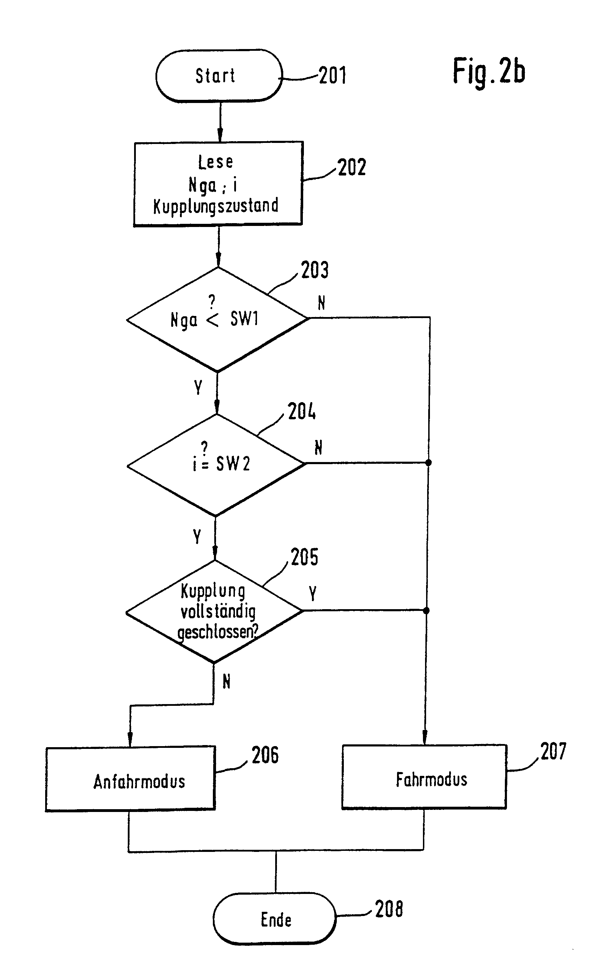

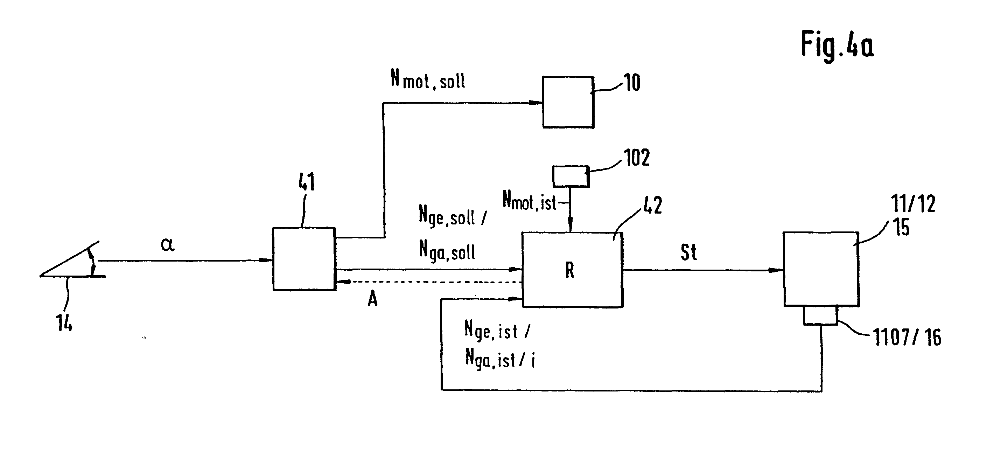

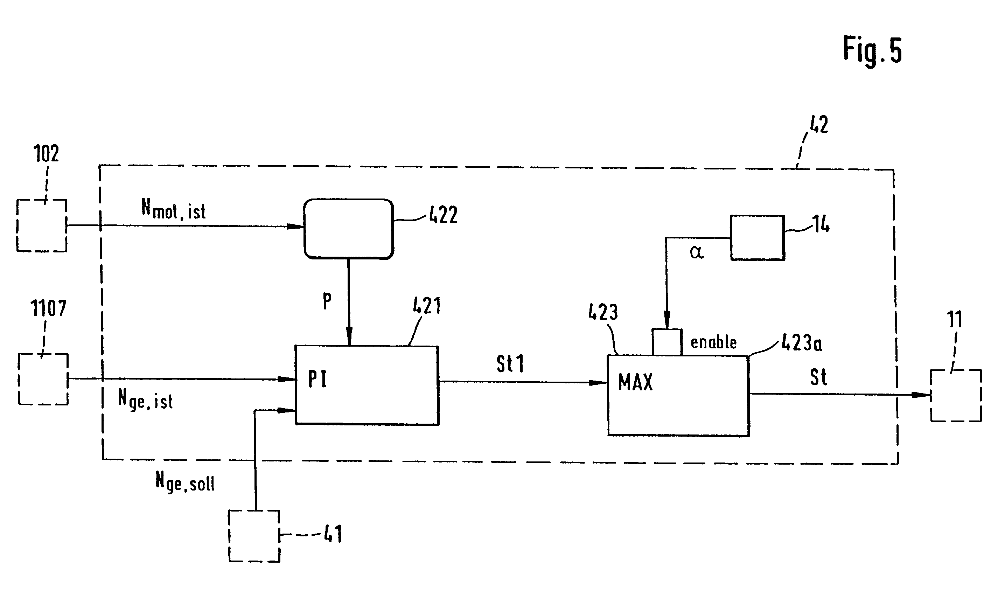

Die Figur 1 zeigt die Erfindung anhand eines Übersichtsblockschaltbildes, während die Figuren 2a und 3 die Koordination des Antriebsstrangs aufzeigen. Die Figur 2b stellt anhand eines Ablaufdiagramms die Auswahl des Anfahr- und Fahrmodus dar. Die Figur 4a beziehungsweise 4b offenbart ein Blockschaltbild beziehungsweise ein Ablaufdiagramm der Anfahrstrategie. Die Figuren 5, 6, 7 und 8 zeigen verschiedene Ausgestaltungen der Erfindungen anhand von Blockschaltbildern.

### Ausführungsbeispiel

Die Erfindung wird im folgenden anhand von verschiedenen Ausführungsbeispielen dargestellt.

Die Figur 1 zeigt mit dem Bezugszeichen 10 einen Fahrzeugmotor, dessen Ausgangswelle mit der Schwungscheibe 1101 der Servokupplung 11 verbunden ist. Abtriebsseitig führt die Servokupplung 11 zu dem Getriebe 12. Der Motor weist das Motormoment Mmot und die Motordrehzahl Nmot, die der Steuereinheit 13 zugeführt wird, auf. Weiterhin wird der Steuereinheit 13 der durch den Wegsensor 1106 erfaßte aktuelle Einrückweg S zugeleitet. Dem Steuergerät 13 wird darüber hinaus noch die durch den Sensor 1107 erfaßte Kupplungsabtriebsdrehzahl Nka, die der Getriebeeingangsdrehzahl Nge entspricht, zugeführt. Daneben wird die Stellung α des Fahrpedals 14, die aktuelle Getriebeübersetzung i und die Getriebeausgangsdrehzahl Nga,soll dem Steuergerät 13 zugeführt. Abhängig von diesen Eingangssignalen steuert die Steuereinheit 13 den Servomotor 1105 mittels des Signals St zur Verstellung der Kupplung an. Weiterhin wird ein Sollwert Nmot,soll für die Motordrehzahl dem Fahrzeugmotor 10 beziehungsweise dessen Steuergerät 101 zugeführt. Die Stellung der Kupplung kann durch den Wegsensor 1106 über das Istsignal Sist überprüft werden. Die Motordrehzahl wird durch den Drehzahlsensor 102 detektiert, wobei dieses Signal im allgemeinen im Motorsteuergerät 101 vorliegt und von dort der Steuereinheit 13 zugeführt werden kann.

Die Kupplung an sich ist in bekannter Weise mit einer Schwungscheibe 1101, einer Kupplungsscheibe 1110, einer Druckplatte 1111, einem Federelement (Tellerfeder) 1102 und dem Ausrücklager 1112 ausgestattet. Das Drehmoment, das von der Kupplung im schleifenden Betrieb übertragen wird, das Kupplungsmoment, ist u. a. durch die Vorspannung der Tellerfeder 1102 gegeben. Die Vorspannung der Tellerfeder 1102 ist wiederum abhängig vom Ausrückweg S des Kupplungsgestänges, das in diesem Ausführungsbeispiel als Zahnstange 1104 ausgebildet ist. Die Zahnstange 1104 wird durch die Ausgangswelle des Stellmotors 1105 betätigt. Im Normalbetrieb der Kupplung wird der Weg S, also der Einrückweg, über einen Regelkreis abhängig von einem Sollwert Ssoll geregelt. Damit läßt sich über den Sollwert Ssoll das Kupplungsmoment steuern.

Während in der Figur 1 der Einrückwert S als Stellgröße der Servokupplung dargestellt ist, kann selbstverständlich auch der Drehwinkel des Stellmotors 1105 oder die Kraft auf die Tellerfeder 1102 als Stellgröße dienen. Bei einem zwischen Kupplung und Steller zwischengeschalteten Hydraulikkreis kann als Stellgröße der Druck im Hydrauliksystem verwendet werden. Die Größe S stellt daher ganz allgemein die Stellgröße für das Kupplungsmoment im schleifenden Zustand dar. In einem besonders einfachen System kann als Stellmotor beispielsweise ein Schrittmotor verwendet werden. Die Anzahl der Impulse, mit denen der Schrittmotor beaufschlagt wird, ist dann ein Maß für dessen relativen Drehwinkel. Auf diese Weise kann auf eine aufwendige Erfassung des aktuellen Einrückweges Sist durch das Wegpotentiometer 1106 verzichtet werden. Wird auf das Wegpotentiometer 1106 verzichtet, so muß allerdings bei jedem Ausrückvorgang (Schließen der Kupplung) die Zahnstange zur Kalibrierung bis zu einem bestimmten mechanischen Anschlag zurückgefahren werden.

Wie schon erwähnt, muß bei Fahrzeugen mit einem elektronischen Kupplungsmanagement, wie es beispielsweise anhand der Figur 1 gezeigt ist, eine Strategie zum Anfahren des Fahrzeugs hinterlegt werden. In diesem Ausführungsbeispiel wird eine Anfahrstrategie für Fahrzeuge beschrieben, die ein solches elektronisches Kupplungsmanagement und ein sogenanntes E-Gas aufweisen. Dies bedeutet, daß die Stellung α des Fahrpedals 14 nicht direkt das Motormoment beziehungsweise die Motorleistung, beispielsweise durch eine direkte Verstellung der Drosselklappe, vorgibt. Mit solchen Systemen ist eine sogenannte koordinierte Antriebsstrangsteuerung möglich. Die vorliegende Erfindung verwendet alle Komponenten eines koordinierten Antriebstrangsmanagements zum Anfahren, um den höchst möglichen Anfahrkomfort zu erreichen.

Bei bekannten Anfahrstrategien wird vom Fahrzeugmotor 10 entsprechend der Stellung α des Fahrpedals 14 ein Motorausgangsmoment zur Verfügung gestellt. Die Kupplung 11 setzt dieses vom Motor zur Verfügung gestellte Moment in eine Beschleunigung um. Dabei ist eine gleichzeitige koordinierte Veränderung des Motormoments nicht vorgesehen.

Wie schon einleitend erwähnt, soll bei dem erfindungsgemäßen Verfahren das Fahrpedal 14 für das Anfahren anders als auβerhalb des Anfahrvorgangs, wo das Fahrpedal 14 leistungs- oder momentenskaliert arbeitet, als Beschleunigungs- beziehungsweise als Geschwindigkeitspedal skaliert werden. Durch diese Interpretation des Fahrerwunsches, repräsentiert durch die Stellung α des Fahrpedals 14, lassen sich alle Antriebsstrangkomenenten frei im Rahmen ihrer Möglichkeiten einsetzen. Die Ansteuerung des Fahrzeugmotors 10 und der Kupplung 11 wird so koordiniert, daß eine dem Fahrerwunsch entsprechende Beschleunigung beziehungsweise Geschwindigkeit erreicht wird. Dabei soll eine monoton steigende Geschwindigkeit mit nur geringen Änderungen in der Beschleunigung erreicht werden.

Die Figur 2a zeigt schematisch eine solche koordinierte Antriebsstrangsteuerung. Dabei gibt der Fahrer durch die Stellung α des Fahrpedals 14 seinen Vortriebs- beziehungsweise Verzögerungswunsch an. Der Koordinator Antrieb und Bremse 22 wandelt diesen Fahrerwunsch in einen Vortriebs- oder Verzögerungswunsch um. Im weiteren Verlauf der Figur 2a wird nur die Koordination zwischen Motor und Getriebe dargestellt, die Koordination der Bremse ist hierbei vernachlässigt.

Der Koordinator Motor und Getriebe 23 bekommt neben dem entsprechend gewandelten Fahrerwunsch vom Koordinator 22 die Information über den Gangbereich beziehungsweise über die Fahrstufe des Getriebes vom Getriebebedienfeld 21 zugeführt. Abhängig von diesen Eingangssignalen gibt der Koordinator Motor und Getriebe 23 an den Fahrzeugmotor 10 ein entsprechendes Motormoment, an die Kupplung 11 ein entsprechendes übertragbares Kupplungsmoment und an das Getriebe 12 eine entsprechende Getriebeübersetzung. Diese Größen können dann in unterlagerten Motor-, Kupplungs- und Getriebereglern umgesetzt werden.

Die erfindungsgemäße Anfahrstrategie wird in einer solchen koordinierten Antriebsstrangsteuerung realisiert, in die ein Anfahrkoordinator, wie in der Figur 3 zu sehen ist, in den Koordinator Motor und Getriebe 23 (Figur 2a) eingefügt wird. Der Koordinator Motor und Getriebe 23 enthält dabei einen Anfahrkoordinator 231, der abhängig von der Stellung α des Fahrpedals 14 Vorgaben für den Motor 10 (Motortreiber 232) und für die Kupplung 11 (Kupplungstreiber 233) ermittelt. Die Getriebeübersetzung des Getriebes 12 bleibt dabei im allgemeinen unverändert.

Bei einer solchen Anfahrstrategie gilt es, das Problem zu lösen, wann von der Beschleunigungs- beziehungsweise Geschwindigkeitsvorgabe des Fahrpedals 14 (Anfahrvorgang) auf die reguläre (Betriebszustand außerhalb des Anfahrvorgangs) Leistungs- beziehungsweise Momentenvorgabe umgeschaltet werden soll.

Besonders vorteilhaft ist es, wenn alle Fahrten im ersten Getriebegang, also dann, wenn die kürzeste beziehungsweise niedrigste Getriebeübersetzung vorliegt, als Anfahrsituation definiert werden. Die Stellung α des Fahrpedals 14 wird damit also immer im ersten Getriebegang als Beschleunigungsbeziehungsweise Geschwindigkeitsvorgabe interpretiert.

Eine andere Definition der Anfahrsituation ist möglich, führt aber unter Umständen zu einem erhöhten Aufwand bei dem Übergang von der Anfahrsituation zum Normalbetrieb. Sollte die Anfahrsituation nicht für das gesamte Fahren im ersten Getriebegang gelten, so muß eine Angleich zwischen dem vom Motor geforderten Moment am Ende der Anfahrsituation und dem der Fahrpedalstellung zu diesem Zeitpunkt entsprechenden Fahrwunschmoment stattfinden.

Wie schon oben beschrieben, kann also allein das Vorliegen des niedrigsten Getriebegangs zur Identifikation eines Anfahrvorgangs benutzt werden. Eine weitere vorteilhafte Ausgestaltung der Erfindung benutzt eine etwas andere Definition dieses Anfahrvorgangs mit der geänderten Interpretation (beschleunigungs- beziehungsweise geschwindigkeitsskaliert) des Fahrpedals. Hierbei wird eine Anfahrsituation dann erfaßt, wenn sich das Fahrzeug mit einer sehr geringen Geschwindigkeit, beispielsweise mit Schrittgeschwindigkeit, bewegt und die Kupplung geöffnet oder zumindest nicht fest geschlossen ist. Die Anfahrsituation wird dann verlassen, wenn eine Getriebeumschaltung auftritt. Dies ist anhand der Figur 2b dargestellt.

Nach dem in der Figur 2b dargestellten Startschritt 201 wird im Schritt 202 die aktuelle Getriebeausgangsdrehzahl Nga (Sensor 16, Figur 1) als Maß für die Fahrzeuglängsgeschwindigkeit und die aktuelle Getriebeübersetzung i sowie der aktuelle Kupplungszustand eingelesen. Im Schritt 203 wird die die Fahrzeuglängsgeschwindigkeit repräsentierende Getriebeausgangsdrehzahl Nga mit dem Schwellwert SW1 verglichen. Überschreitet die Fahrzeuglängsgeschwindigkeit den relativ niedrigen Schwellwert SW1, so wird im Schritt 207 die koordinierte Antriebsstrangsteuerung für den Normalfahrbetrieb verfolgt. Dabei wird im allgemeinen die Stellung α des Fahrpedals momenten- beziehungsweise leistungsskaliert interpretiert. Unterschreitet jedoch die Fahrgeschwindigkeit beziehungsweise die Getriebeausgangsdrehzahl den Schwellwert SW1, so wird im Schritt 204 überprüft, ob die aktuelle Getriebeübersetzung i einem Schwellwert SW2 entspricht. In dem Schritt 204 wird abgefragt, ob der niedrigste Getriebegang eingelegt ist. Ist dies nicht der Fall, so wird der Fahrmodus im Schritt 207 gewählt. Befindet sich jedoch die Fahrzeuglängsgeschwindigkeit unterhalb des Schwellwerts SW1 und ist gleichzeitig der niedrigste Getriebegang eingelegt, so wird im Schritt 205 abgefragt, ob die Kupplung vollständig geschlossen ist. Ist dies der Fall, so wird der Normalbetriebsmodus 207 eingestellt. Ist jedoch die Kupplung wenigstens teilweise offen, so wird im Schritt 206 der Anfahrmodus gewählt, bei dem die Stellung α des Fahrpedals 14, wie erwähnt, geschwindigkeits- beziehungsweise beschleunigungsskaliert interpretiert wird. Nach dem Endschritt 208 wird der in der Figur 2b gezeigte Ablauf erneut gestartet.

Der in der Figur 2b gezeigte Ablauf dient zur Erkennung des Anfahrzustands. Ein Wechsel eines einmal erkannten Anfahrzustands (Block 206) zum Fahrmodus (Block 207) findet wie erwähnt dann statt, wenn eine Getriebeumschaltung auftritt.

Durch diese Ausgestaltung wird ein potentieller Momentenruck bei der Umschaltung der Fahrpedalinterpretation vermieden. Wird das Fahrzeug aus dem Stand heraus beschleunigt, so wird die Fahrpedalstellung bis zur ersten Getriebeumschaltung als Geschwindigkeits- beziehungsweise Beschleunigungsvorgabe interpretiert. Auf diese Weise fällt ein eventueller Ruck bei dieser Umschaltung der Fahrpedalinterpretation mit dem für eine Getriebeumschaltung im allgemeinen unvermeidlichen Schaltruck zusammen. Bei einer Rückschaltung des Getriebes, beispielsweise vom zweiten in den ersten Getriebegang (weil das Fahrzeug zu langsam wird oder weil der Fahrer durch ein starkes Betätigen des Fahrpedals eine Rückschaltung anfordert oder weil er über eine manuelle Vorgabe den ersten Gang wählt) dient das Fahrpedal weiterhin als Momentenvorgabe. So ist eine Rückschaltung vom zweiten in den ersten Getriebegang ganz analog einer anderen Rückschaltung zu behandeln und erfordert keine Sonderbehandlung. Erst wenn das Fahrzeug fast vollständig zum Stillstand kommt und die Kupplung schon geöffnet ist, tritt wieder eine Anfahrsituation auf; und über das Fahrpedal wird wieder eine Geschwindigkeit beziehungsweise Beschleunigung vorgegeben. So findet auch beim erneuten Auftreten einer Anfahrsituation kein Momentensprung statt.

Die Figur 4a zeigt anhand eines Übersichtsblockschaltbildes die geschwindigkeits- beziehungsweise beschleunigungsskalierte Regelung während des Anfahrbetriebs. Hierzu wird die Stellung α des Fahrpedals 14 in einen Block 41 in einen entsprechenden Sollwert Nge,soll (oder Nga,soll) für die Getriebeeingangsdrehzahl (oder die Getriebeausgangsdrehzahl) umgewandelt. Darüber hinaus wird im Block 41 abhängig von der Fahrpedalstellung α ein Sollwert Nmot,soll für den Fahrzeugmotor 10 ermittelt. Dem eigentlichen Anfahrregler 42 wird neben den erwähnten Sollwerten des Blocks 41 ein Istwert Nmot,ist (Sensor 102) sowie die Istwerte der Getriebeübersetzung i und der Getriebeausgangsdrehzahl Nge,ist oder der Getriebeausgangsdrehzahl Nga,ist zugeführt. Abhängig von diesen Eingangssignalen bildet der Reglerblock 42 das Steuersignal St für die Kupplung 11.

Innerhalb der Anfahrsituation muß unterschieden werden, zwischen einem ersten Zustand mit rutschender Kupplung, bei dem ein relativ großer Kupplungsschlupf beziehungsweise eine relativ große Drehzahldifferenz ΔN = Nke,ist - Nka,ist vorliegt, einem Übergangszustand, in dem die Kupplung schließt, und einem Endzustand, bei dem die Kupplung vollständig geschlosssen ist, unterschieden werden.

Die Anfahrstrategie für den ersten Zustand (großer Kupplungsschlupf, ΔN ist groß) lautet:
- Abhängig von der Fahrpedalstellung α wird im Anfahrkoordinator 231 (Figur 3) eine Motorsolldrehzahl Nmot,soll gefordert. Diese wird von einem Regler im Motortreiber beziehungsweise im Motorsteuergerät eingestellt und mit hoher Regelgüte gehalten.
- Ebenfalls abhängig von der Fahrpedalstellung α wird eine Beschleunigung a,soll und damit eine Fahrzeuglängsgeschwindigkeit oder direkt eine Fahrzeuglängsgeschwindigkeit gefordert. Diese Geschwindigkeit wird vom Kupplungstreiber beziehungsweise vom Kupplungssteuergerät durch eine entsprechende Momentenforderung an die Kupplung geregelt.
- Die Momentenforderung des Kupplungstreibers dient zusätzlich als Steuergrößenaufschaltung auf den Drehzahlregler im Motortreiber.

Für den Fall, daß die Getriebeeingangsdrehzahl bis auf einen kleinen Schwellwert die Motordrehzahl erreicht hat, es liegt also nur ein geringer Kupplungsschlupf vor, wird in dem oben genannten zweiten Zustand auf folgende Strategie übergegangen:
- Die Kupplung schleift und wird geschlossen.
- Eine leichte Anhebung der Motordrehzahl kurz vor dem Übergang der Kupplung in Haftreibung sorgt dafür, daß keine Schwingungsanregung des Antriebsstrangs erfolgt.

In dem Moment, in dem die Kupplungseingangsdrehzahl gleich der Kupplungsausgangsdrehzahl ist (kein Kupplungsschlupf), wird in den genannten dritten Zustand übergegangen:
- Mit der Motordrehzahl wird die Sollgetriebeausgangsdrehzahl (entspricht der Fahrzeuggeschwindigkeit) und damit die Sollbeschleunigung geregelt.

Das heißt, daß im dritten Zustand der Motortreiber nach Vorgabe der Solldrehzahl (entspricht der Sollgeschwindigkeit) das vom Motor zu fordernde Ausgangsmoment regelt.

Der dritte Zustand wird dann verlassen, wenn:
1. die Anfahrsituation verlassen wird (beispielsweise bei einer Hochschaltanforderung in den zweiten Getriebegang) oder
2. während der Anfahrsituation die Getriebeeingangsdrehzahl bis auf einen Schwellwert an die der Fahrpedalstellung entsprechende Motordrehzahl sinkt (Rückfall in den ersten Zustand).

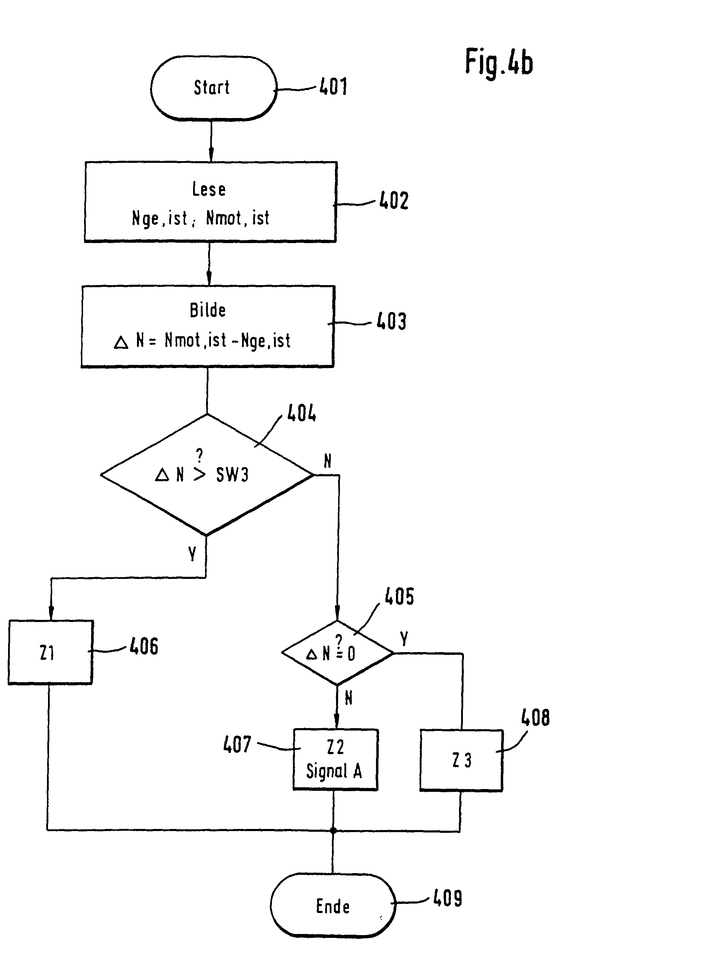

Diese Vorgehensweise während des Anfahrvorgangs ist in der Figur 4b dargestellt. Nach dem Startschritt 401 werden im Schritt 402 die aktuellen Werte für die Getriebeeingangsdrehzahl Nge,ist (entspricht der Kupplungsausgangsdrehzahl) und für die Motordrehzahl (Nmot,ist) eingelesen. Im Schritt 403 wird die Differenz ΔN = Nmot,ist - Nge,ist als Maß für den Kupplungsschlupf ermittelt. Im Schritt 404 wird abgefragt, ob die im Schritt 403 ermittelte Drehzahldifferenz einen Schwellwert SW3 überschreitet. Ist dies der Fall, so wird der oben beschriebene erste Zustand mit dem Block 406 erfaßt. Wird im Schritt 404 jedoch festgestellt, daß der Kupplungsschlupf unter dem Schwellwert SW3 liegt, so wird im Block 405 abgefragt, ob der Kupplungsschlupf Null vorliegt oder nicht. Weist die Kupplung noch einen geringen Kupplungsschlupf auf, so wird mit dem Block 407 der oben erwähnte zweite Zustand eingestellt. Dies kann beispielsweise durch Abgabe des Signals A vom Regler 42 (Figur 4a) zum Block 41 (Figur 4a) signalisiert werden. Ist die Kupplung vollständig geschlossen, so wird der oben erwähnte dritte Zustand mit dem Block 403 gewählt. Nach dem Endschritt 409 wird der in der Figur 4b gezeigte Ablauf erneut gestartet.

Durch die Interpretation des Fahrpedals beim Anfahren als Beschleunigungs- beziehungsweise Geschwindigkeitspedal wird sichergestellt, daß das Verhalten des Fahrzeugs beim Anfahren bei allen Lastsituationen, beispielsweise für einen Bergauf-, Anhänger-, Bergabfahrbetrieb, gleich ist. Die Komponenten Kupplungs- und Motortreiber beinhalten Regler, die dafür sorgen, daß der Anfahrzustand bei einer konstanten Beschleunigung sowohl bei rutschender Kupplung als auch geschlossener Kupplung abläuft. Der Übergang zwischen den Zuständen ist dadurch relativ unkritisch und verursacht keine starken Änderungen der Beschleunigung, er ist praktisch ruckfrei. Der Aufwand, um diesen Übergang zwischen den Zuständen beim Anfahrvorgang zu verschleifen, ist somit gering, er kann beispielsweise durch ein leichtes Erhöhen der Motorsolldrehzahl kurz vor dem Übergang der Kupplung in Haftreibung, also im Zustand 2, bewerkstelligt werden.

Durch die in dem Motor- und Kupplungstreiber integrierten Regler lassen sich Ausnahmesituationen, wie beispielsweise das Anfahren über eine Bordsteinkante, besonders einfach und sicher regeln. Das Zustellen der zusätzlichen Momente übernehmen die jeweiligen Integratoren der Regler. Beschleunigt das Fahrzeug nach dem Erreichen der Bordsteinoberkante, so sorgen diese Regler auch für den sofortigen Abbau des überschüssigen Antriebsmoments.

Wird zusätzlich jede Fahrt im ersten Getriebegang als Anfahrsituation gewertet, so ist keine Umschaltung der Fahrpedalinterpretation nötig, womit die Anfahrsituation besonders leicht zu beherrschen ist. Beim Schalten in den zweiten Getriebegang tritt in jedem Fall wie erwähnt ein gewisser Momentenruck auf, durch den die nötige Umschaltung der Fahrpedalinterpretation verdeckt wird.

Bei der erfindungsgemäßen Anfahrstrategie soll also durch die Momentenforderung an die Kupplung und durch die Einstellung einer Motorsolldrehzahl eine sanft ansteigende Längsgeschwindigkeit eingestellt werden. Hierbei soll das maximal übertragbare Moment der Kupplung nicht gesteuert, sondern geregelt werden. Im folgenden wird die Struktur dieses Reglers genauer beschrieben.

Grundlage für die Regelung ist ein PI-Regler, also ein bekannter Regler mit einem Proprotional- und einem Differentialanteil. Als Regelgröße kommen die Getriebeeingangsdrehzahl Nge oder die Geschwindigkeit des Fahrzeugs in Betracht. Alternativ kann auch der Gradient dieser Größen als Regelgröße dienen. Im folgenden Ausführungsbeispiel wird als Regelgröße die Getriebeeingangsdrehzahl betrachtet. Hierzu wird der in der Figur 4a gezeigte Regler 42 anhand der Figuren 5, 6 und 7 näher erläutert.

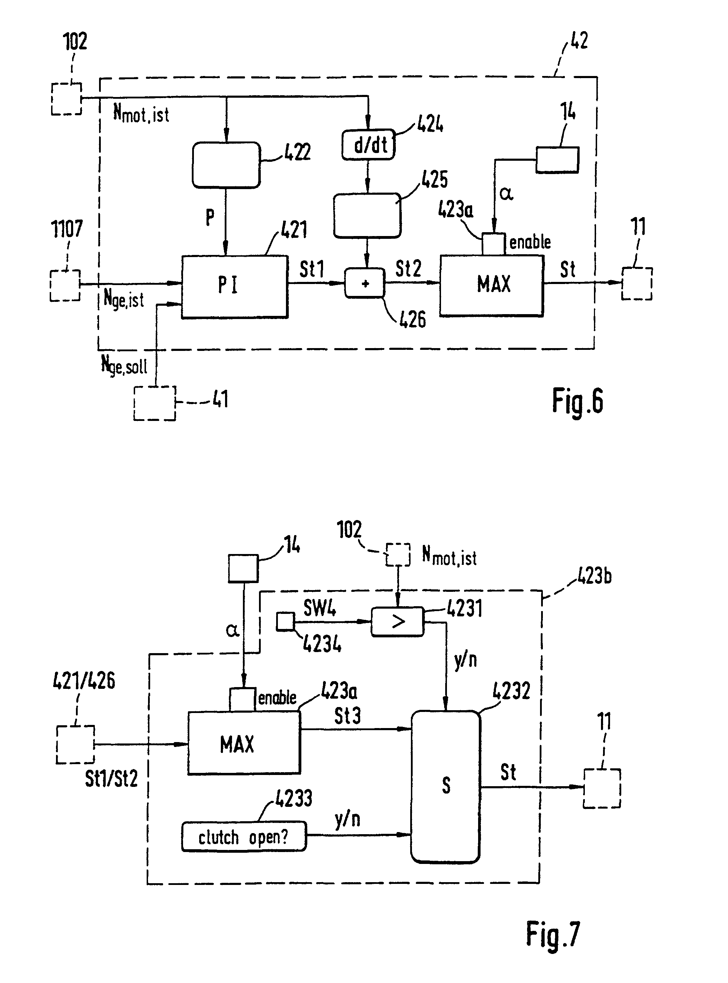

Grundlage für die Regelung durch den Regler 42 ist ein PI-Regler 421 (Figur 5 und 6). Es ist dabei vorteilhaft, die Parameter dieses Reglers abhängig von der Motordrehzahl vorzugeben. Insbesondere wird hierzu dem PI-Regler 421 in den Figuren 5 und 6 die Verstärkung P abhängig von dem Istwert Nmot,ist der Motordrehzahl zugeführt. Vorteilhaft ist es, wenn diese Verstärkung P bei geringer Motordrehzahl klein ist und bei sehr geringer Motordrehzahl, unterhalb der Leerlaufdrehzahl, zu Null wird. So kann sichergestellt werden, daß die Kupplung bei kritischer Motordrehzahl nicht weiter geschlossen wird, denn ein zu starkes Absinken der Motordrehzahl im Anfahrvorgang wird als sehr unkomfortabel empfunden.

Der Ausgang ST1 des PI-Reglers 421, der selbstverständlich auch noch begrenzt werden kann, ist ein Rohwert der Stellgröße. Die Stellgröße kann entweder ein maximal übertragbares Moment für die Kupplung oder ein Verstellweg für die Kupplungsmechanik sein. Ist die Stellgröße ein Moment, so ist es vorteilhaft, sie auf Werte zwischen Null und einem sinnvollen Mehrfachen des maximalen Motormoments zu begrenzen. Ist die Stellgröße ein Verstellweg, so ist es vorteilhaft, sie auf die bauartbedingten Grenzen dieses Weges zu begrenzen.

Würde die Kupplung direkt mit diesem Rohwert ST1 der Stellgröße angesteuert, so könnte es passieren, daß während eines Anfahrvorgangs die Kupplung wieder geöffnet wird, wenn beispielsweise die aktuelle Getriebeeingangsdrehzahl größer ist als der Vorgabewert. Solch ein Öffnen der Kupplung während des Anfahrvorgangs kann zu Schwingungen des Antriebsstrangs führen und wird deshalb als sehr unkomfortabel empfunden. Deshalb muß im Regler 42 dafür gesorgt werden, daß die Kupplung während des Anfahrvorgangs nur weiter geschlossen, aber nicht wieder geöffnet werden kann. Hierzu dient der Maximumsbildner 423a (Figuren 5, 6 und 7).

Dem Maximumwertbilder 423a wird neben dem Rohwert der Stellgröße die Stellung α des Fahrpedals 14 zugeführt. Der Maximumsbildner 423a wird dann aktiviert, wenn die Fahrpedalstellung α einen gewissen geringen Schwellwert überschritten hat (Eingang enable). Ist der Maximumsbildner 423a aktiviert, so ist dessen Ausgangswert St das Maxiumum aus dem Eingangswert St1 bzw. St2 und dem bisher gespeicherten Maximum dieser Werte. Das bisher gespeicherte Maximum wird dann gegebenenfalls erhöht. Ist der Maximumsbildner 423a nicht aktiviert, so ist der Ausgangswert gleich dem Eingangswert und das gespeicherte Maximum wird auf den Eingangswert zurückgesetzt. Wie erwähnt, wird der Maximumsbildner 423a bei der Kupplungsregelung so eingesetzt, daß er dann aktiviert ist, wenn das Fahrpedal 14 betätigt wird. So kann bei betätigtem Fahrpedal 14 die Stellgröße für die Kupplung nur steigen und die unkomfortablen Antriebsstrangschwingungen werden vermieden. Ist das Fahrpedal 14 aber nicht mehr betätigt, will der Fahrer also den Anfahrvorgang abbrechen, so darf die Kupplung auch wieder geöffnet werden, denn, wenn das Fahrzeug zum Stillstand kommt, muß die Kupplung ja spätestens geöffnet sein.

Eine vorteilhafte Erweiterung der in der Figur 5 dargestellten Regelung während des Anfahrvorgangs zeigt die Figur 6. Diese Erweiterung mildert besonders die störenden Drehzahländerungen des Motors im Anfahrvorgang ab. Die in der Figur 5 gezeigte Ausgestaltung kann dazu führen, daß ein zu starkes Absinken der Drehzahl, beispielsweise unter die Leerlaufdrehzahl, durch eine Verkleinerung der Verstärkung P verhindert wird. Ein starkes Absinken der Motordrehzahl von einem bereits erhöhten Niveau aus, kann so allerdings nicht verhindert werden. Deshalb ist es vorteilhaft, den Gradienten der Motordrehzahl in der Regelung der Kupplung zu berücksichtigen. Hierzu muß der Gradient der Motordrehzahl eventuell noch geeignet gefiltert werden. Aus diesem Grund wird in der Figur 6 dem Reglerausgang St1 ein motordrehzahlgradientenabhängiger Anteil im Block 426 additiv überlagert. Zur Bildung dieses Anteils ist ein Kennfeld 425 vorgesehen, das als Eingangsgröße die differenzierte (Block 424) Motordrehzahl Nmot,ist zugeführt bekommt.

In der in der Figur 6 gezeigten Ausführungsvariante wird bei einem negativen Gradienten der Motordrehzahl der Rohwert St1 der Stellgröße vermindert. Dies führt dazu, daß bei sinkender Motordrehzahl, auch auf hohem Niveau, die Kupplung nicht weiter geschlossen wird. Das unkomfortable Öffnen der Kupplung wird durch den schon beschriebenen Maximumsbildner 423a verhindert.

Eine weitere vorteilhafte Erweiterung im Regler der Kupplung zeigt die Figur 7. Nach den bisherigen Ausführungen wird die Kupplung bei betätigtem Fahrpedal 14 höchstens weiter geschlossen, jedoch nie geöffnet. In besonders kritischen Situationen, beispielsweise beim Anfahren am Berg mit hoher Last und zu geringem Motormoment, kann jedoch der Motor abgewürgt werden, wenn die Kupplung zuvor zu schnell geschlossen wurde. Auch durch eine geeignete Applikation beziehungsweise Anpassung der Kennlinien 422 und 425 aus den Figuren 5 und 6 läßt sich dies unter Umständen nicht immer sicher verhindern. Deshalb ist es vorteilhaft, die Kupplung zu öffnen, wenn die Motordrehzahl eine kritische Schwelle unterschreitet.

Hierzu wird wie in der Figur 7 dargestellt, das Ausgangssignal St3 des Maximumsbildners 423a einem Schaltelement 4232 zugeführt. Weiterhin liegt eingangsseitig an dem Schaltelement 4232 die Information 4233 an, ob die Kupplung offen oder geschlossen ist. Darüber hinaus liegt an dem Schaltelement 4232 die Information an, ob die aktuelle Motordrehzahl Nmot,ist (Sensor 102) einen Schwellwert SW4 (Speicher 4234) unterschreitet (Schwellwertvergleich 4231). Das Schaltelement 4232 sorgt nun durch Abgabe der Stellgröße St an die Servokupplung 11 dafür, daß die Kupplung geöffnet wird, wenn die Motordrehzahl Nmot,ist den Schwellwert SW4 unterschreitet.

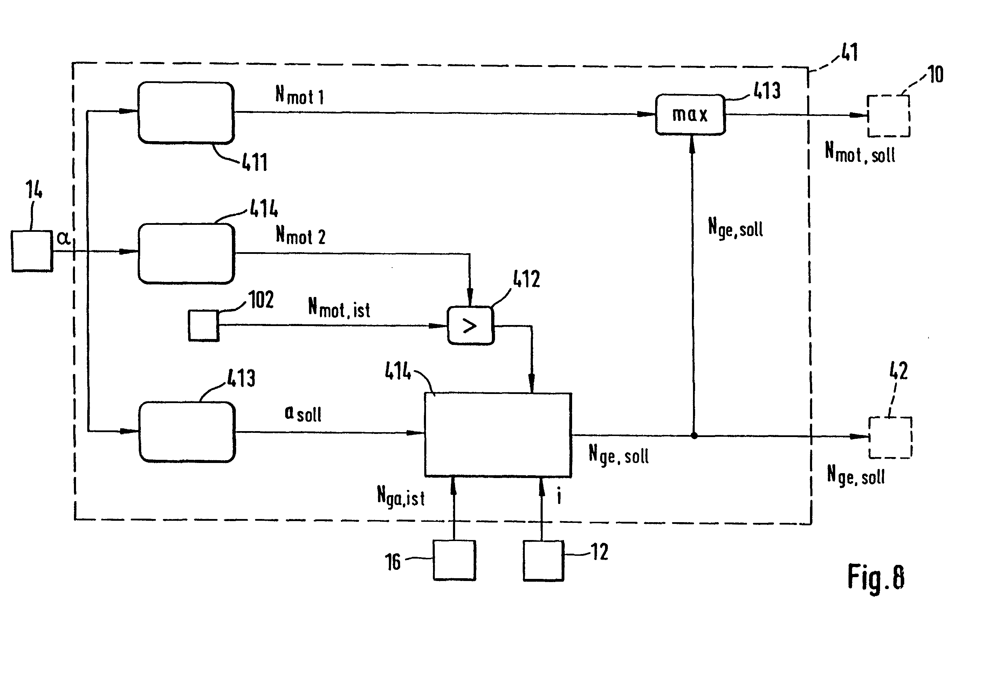

Weiterhin ist es vorteilhaft, mit dem Schließen der Kupplung erst dann zu beginnen, wenn der Motor eine gewisse Mindestdrehzahl erreicht hat. Dies ermöglicht ein zügigeres Anfahren, da der Fahrzeugmotor in der Regel bei seiner Leerlaufdrehzahl nur ein sehr geringes Moment zur Verfügung stellen kann, das kein zügiges Anfahren erlaubt. Die Figur 8 zeigt hierzu eine nähere Ausgestaltung des Blocks 41 der Figur 4a, der Sollwerte Nmot,soll und Nge,soll für die Motor- und Getriebeeingangsdrehzahl ermittelt. Die Differenz aus der Sollgetriebeeingangsdrehzahl Nge,soll und der gemessenen Getriebeeingangsdrehzahl Nge,ist kann als Regelgröße bei den in den Figuren 5 und 6 dargestellten Varianten dienen.

In dem in der Figur 8 dargestellten Block 41 wird zunächst aus der Fahrpedalstellung α mittels der Kennlinie 411 eine Motordrehzahl Nmot1 für den Anfahrvorgang mit noch nicht geschlossener Kupplung bestimmt. Außerdem wird, beispielsweise über eine Kennlinie 414, abhängig von der Fahrpedalstellung α eine Motordrehzahl Nmot2 bestimmt, ab der die Kupplung geschlossen werden soll. Diese Drehzahl liegt zwischen der Leerlaufdrehzahl des Motors und der Anfahrdrehzahl Nmotl, beispielsweise in der Mitte.

Zur Vorgabe Nge,soll der Getriebeeingangsdrehzahl wird zunächst aus der Fahrpedalstellung α, beispielsweise über die Kennlinie 413, eine Sollbeschleunigung asoll des Fahrzeugs bestimmt. In dem Rechenblock 414 wird aus dieser Beschleunigung unter Benutzung der aktuellen Fahrzeuggeschwindigkeit beziehungsweise der aktuellen Getriebeausgangsdrehzahl Nga,ist und der Getriebeübersetzung i eine Getriebeeingangsdrehzahl Nge,soll berechnet. In diesem Rechenblock 414 kann beispielsweise auch die Sollgetriebeeingangsdrehzahl Nge,soll nach oben und unten begrenzt werden. Eine Begrenzung nach unten auf einen Wert größer Null bewirkt, daß über den Kupplungstreiber eine Kriechneigung des Fahrzeugs realisiert werden kann.

Weiterhin kann der Rechenblock 414 so ausgestaltet sein, daß die Sollgetriebeeingangsdrehzahl Nge,soll erst dann ansteigen darf, wenn die Motordrehzahl Nmot den Schwellwert Nmot2 überschritten hat (Vergleich der Istmotordrehzahl Nmot,ist mit dem Schwellwert Nmot2 im Block 412). So hat der Motor die Chance, zunächst eine erhöhte Drehzahl zu erreichen, bei der er ein höheres Moment abgeben kann.

Die anhand der Figuren 5, 6, 7 und 8 angeführten Modifikationen gegenüber einem einfachen PI-Regler erlauben bei Fahrzeugen mit automatisierter Kupplung in jeder Situation ein komfortables Anfahren.

## Patentansprüche

1. System zur gemeinsamen Steuerung einer im Antriebsstrang eines Kraftfahrzeugs angeordneten Servokupplung (11) und eines im Antriebsstrang angeordneten Fahrzeugmotors (10) mit einem Fahrpedal (14), dessen Stellung (α) erfaßt wird, wobei
- bei Vorliegen eines vorgebbaren ersten Betriebszustands die Servokupplung (11) und der Fahrzeugmotor (10) derart gesteuert werden, daß die erfaßte Stellung (α) des Fahrpedals (14) die Beschleunigung (asoll) und/oder die Geschwindigkeit (Nga,soll) des Fahrzeugs vorgibt und
- bei Vorliegen eines vorgebbaren zweiten Betriebszustands, der insbesondere im Bereich höherer Fahrzeuggeschwindigkeiten (Nga) außerhalb des Anfahrbereichs auftritt, wenigstens der Fahrzeugmotor (10) derart gesteuert ist, daß die erfaßte Stellung (α) des Fahrpedals (14) das Antriebsmoment oder die Antriebsleistung des Fahrzeugmotors oder des Fahrzeugs vorgibt.

2. System nach Anspruch 1, **dadurch gekennzeichnet, dass** die Steuerung der Servokupplung (11) und des Fahrzeugmotors (10) weiterhin abhängig von einer den Schlupf der Kupplung repräsentierenden Größe (ΔN) geschieht.

3. System nach Anspruch 1 oder 2, **dadurch gekennzeichnet, daß** im Antriebsstrang des Kraftfahrzeugs weiterhin ein in seiner Getriebeübersetzung (i) verstellbares Getriebe (12) angeordnet ist und das Vorliegen des vorgebbaren ersten Betriebszustands dann erkannt wird, wenn eine vorgebbare, insbesondere kurze bzw. niedrige, Getriebeübersetzung (SW2) eingestellt ist.

4. System nach Anspruch 1 oder 2, **dadurch gekennzeichnet, daß** der erste Betriebszustand derart vorgegeben wird, daß er im Bereich niedriger Fahrzeuggeschwindigkeiten (Nga), insbesondere im Anfahrbereich, auftritt, wobei insbesondere vorgesehen ist, daß der Betriebszustand dann vorliegt, wenn die Fahrzeuggeschwindigkeit (Nga) einen vorgebbaren Schwellwert (SW1) unterschreitet und die Servokupplung (11) wenigstens teilweise geöffnet ist.

5. System nach Anspruch 1 oder 2, **dadurch gekennzeichnet, daß** die Servokupplung (11) und der Fahrzeugmotor (10) derart gesteuert werden, daß eine ansteigende Geschwindigkeit (Nga), insbesondere mit kleinen Beschleunigungsänderungen, erzielt wird.

6. System nach Anspruch 2, **dadurch gekennzeichnet, daß** bei
- bei Vorliegen eines größeren Schlupfes der Fahrzeugmotor (10) derart gesteuert wird, daß eine von der Stellung (α) des Fahrpedals (14) abhängige Drehzahl (Nmot,soll) des Fahrzeugmotors eingestellt wird und die Kupplung (11) derart gesteuert wird, daß eine von der Stellung des Fahrpedals abhängige Fahrzeuggeschwindigkeit (Nga,soll) und/oder Fahrzeugbeschleunigung (asoll) eingestellt wird, und
- bei Vorliegen eines kleineren Schlupfes die Kupplung (11) vollständig geschlossen wird und der Fahrzeugmotor (10) kurz vor dem vollständigen Schließen der Kupplung derart gesteuert wird, daß die eingestellte Drehzahl des Fahrzeugmotors erhöht wird, und insbesondere vorgesehen ist, daß
- nach dem vollständigen Schließen der Kupplung (11) der Fahrzeugmotor derart gesteuert wird, daß eine von der Stellung des Fahrpedals abhängige Fahrzeuggeschwindigkeit und/oder Fahrzeugbeschleunigung eingestellt wird.

7. System nach Anspruch 1 oder 2, **dadurch gekennzeichnet, daß** bei Vorliegen des vorgebbaren ersten Betriebszustands die Steuerung der Servokupplung (11) derart geschieht, daß die Kupplung nur im Sinne eines Schließens der Kupplung getätigt wird.

8. System nach Anspruch 1 oder 2, **dadurch gekennzeichnet, daß** bei Vorliegen des vorgebbaren ersten Betriebszustands die Steuerung der Servokupplung (11) und des Fahrzeugmotors (10) derart geschieht, daß die Kupplung nur dann im Sinne eines Öffnens der Kupplung betätigt wird, wenn die erfaßte Drehzahl des Fahrzeugmotors einen Schwellwert (SW4) unterschreitet.

9. System nach Anspruch 1 oder 2, **dadurch gekennzeichnet, daß** bei Vorliegen des vorgebbaren ersten Betriebszustands die Steuerung der Servokupplung (11) abhängig von dem Gradienten (d/dt) der Drehzahl des Fahrzeugmotors geschieht.

10. System nach Anspruch 1 oder 2, **dadurch gekennzeichnet, daß** bei Vorliegen des vorgebbaren ersten Betriebszustands die Steuerung der Servokupplung (11) derart geschieht, daß die Kupplung nur dann im Sinne eines Schließens betätigt wird, wenn die erfaßte Drehzahl (Nmot,ist) des Fahrzeugmotors einen Schwellwert (Nmot2) überschreitet, wobei insbesondere vorgesehen ist, daß der Schwellwert (Nmot2) abhängig ist von der erfaßten Stellung (α) des Fahrpedals (14).

## Claims

1. System for combined control of a servo clutch (11), arranged in the drive train of a motor vehicle, and an engine (10) of a vehicle which is arranged in the drive train, by means of an accelerator pedal (14) whose position (α) is sensed, wherein
- when a predefinable first operating state is present, the servo clutch (11) and the engine (10) of the vehicle are controlled in such a way that the sensed position (α) of the accelerator pedal (14) predefines the acceleration (asoll) and/or the velocity (Nga,soll) of the vehicle, and
- when a predefinable second operating state is present, said operating state occurring in particular in the region of relatively high vehicle velocities (Nga) outside the driving-off region, at least the engine (10) of the vehicle is controlled in such a way that the sensed position (α) of the accelerator pedal (14) predefines the drive torque or the drive power of the vehicle engine or of the vehicle.

2. System according to Claim 1, **characterized in that** the servo clutch (11) and the engine (10) of the vehicle continue to be controlled as a function of a variable (ΔN) representing the slip of the clutch.

3. System according to Claim 1 or 2, **characterized in that** a gear mechanism (12) which has an adjustable transmission ratio (i) continues to be arranged in the drive train of the motor vehicle and the presence of the predefinable first operating state is detected if a predefinable, in particular short or low transmission ratio (SW2) is set.

4. System according to Claim 1 or 2, **characterized in that** the first operating state is predefined in such a way that it occurs in the region of low vehicle velocities (Nga), particularly in the driving-off region, wherein there is in particular provision for the operating state to be present if the vehicle velocity (Nga) drops below a predefinable threshold value (SW1) and the servo clutch (11) is at least partially opened.

5. System according to Claim 1 or 2, **characterized in that** the servo clutch (11) and the engine (10) of the vehicle are controlled in such a way that an increasing velocity (Nga), in particular with small changes in acceleration, is brought about.

6. System according to Claim 2, **characterized in that**
- when a relatively large slip is present, the engine (10) of the vehicle is controlled in such a way that a rotational speed (Nmot,soll) of the engine of the vehicle which is dependent on the position (α) of the accelerator pedal (14) is set and the clutch (11) is controlled in such a way that a vehicle velocity (Nga,soll) and/or vehicle acceleration (asoll) which are/is dependent on the position of the accelerator pedal are/is set, and
- when a relatively small slip is present, the clutch (11) is completely closed and the engine (10) of the vehicle is controlled just before the clutch closes completely, in such a way that the rotational speed of the engine of the vehicle which is set is increased, and in particular there is provision that
- after the clutch (11) closes completely, the engine of the vehicle is controlled in such a way that a vehicle velocity and/or vehicle acceleration which are/is dependent on the position of the accelerator pedal are/is set.

7. System according to Claim 1 or 2, **characterized in that**, when a predefinable first operating state is present, the servo clutch (11) is controlled in such a way that the clutch is activated only in the sense of closing the clutch.

8. System according to Claim 1 or 2, **characterized in that**, when the predefinable first operating state is present, the servo clutch (11) and the engine (10) of the vehicle are controlled in such a way that the clutch is activated in the sense of opening the clutch only if the sensed rotational speed of the engine of the vehicle drops below a threshold value (SW4).

9. System according to Claim 1 or 2, **characterized in that**, when the predefinable first operating state is present, the servo clutch (11) is controlled as a function of the gradient (d/dt) of the rotational speed of the engine of the vehicle.

10. System according to Claim 1 or 2, **characterized in that**, when the predefinable first operating state is present, the servo clutch (11) is controlled in such a way that the clutch is activated in the sense of closing only if the sensed rotational speed (Nmot,ist) of the engine of the vehicle exceeds a threshold value (Nmot2), wherein there is in particular provision for the threshold value (Nmot2) to be dependent on the sensed position (α) of the accelerator pedal (14).

## Revendications

1. Système de commande commune d'un servo-embrayage (11) disposé dans une chaîne cinématique d'un véhicule automobile, et d'un moteur de véhicule (10) disposé dans la chaîne cinématique, comportant une pédale d'accélérateur (14) dont la position (α) est enregistrée, et dans lequel
- en présence d'un premier état de fonctionnement pouvant être prédéterminé, le servo-embrayage (11) et le moteur du véhicule (10) sont commandés de telle sorte que la position enregistrée (α) de la pédale d'accélérateur (14) prédétermine l'accélération (asoll) et/ou la vitesse (Nga,soll) du véhicule et
- en présence d'un deuxième état de fonctionnement pouvant être prédéterminé, qui apparaît en particulier dans la plage des vitesses du véhicule les plus élevées (Nga), en-dehors de la plage de démarrage, au moins le moteur du véhicule (10) est commandé de telle sorte que la position enregistrée (α) de la pédale d'accélérateur (14) prédétermine le couple d'entraînement ou la puissance d'entraînement du moteur du véhicule ou du véhicule.

2. Système selon la revendication 1,
**caractérisé en ce que**
la commande du servo-embrayage (11) et du moteur du véhicule (10) s'effectue en outre en fonction d'une grandeur (ΔN) représentant le patinage de l'embrayage.

3. Système selon la revendication 1 ou 2,
**caractérisé en ce qu'**
une boîte de vitesses (12) réglable en ce qui concerne son rapport de démultiplication (i) est en outre disposée dans la chaîne cinématique du véhicule automobile et, en présence du premier état de fonctionnement pouvant être prédéterminé, on détecte alors lorsqu'un rapport de démultiplication (SW2) pouvant être prédéterminé, en particulier plus court ou plus faible, est réglé.

4. Système selon la revendication 1 ou 2,
**caractérisé en ce que**
le premier état de fonctionnement est prédéterminé de telle sorte qu'il apparaît dans la plage des vitesses les plus faibles du véhicules (Nga), en particulier dans la plage de démarrage, et il est prévu plus particulièrement que cet état de fonctionnement apparaisse lorsque la vitesse du véhicule (Nga) passe en dessous d'une valeur seuil pouvant être prédéterminée et lorsque le servo-embrayage (11) est au moins partiellement ouvert.

5. Système selon la revendication 1 ou 2,
**caractérisé en ce que**
le servo-embrayage (11) et le moteur du véhicule (10) sont commandés de telle sorte que l'on atteint une vitesse croissante (Nga), en particulier avec de petites modifications d'accélération.

6. Système selon la revendication 2,
**caractérisé en ce que**
- en présence d'un patinage plus important, le moteur du véhicule (10) est commandé de telle sorte qu'un régime (Nmot,soll) du moteur du véhicule dépendant de la position (α) de la pédale d'accélérateur (14) est réglé, et l'embrayage (11) est commandé de telle sorte qu'une vitesse du véhicule (Nga,soll) et/ou une accélération du véhicule (asoll) dépendante de la position de la pédale d'accélérateur est réglée, et
- en présence d'un patinage moins important, l'embrayage (11) est complètement fermé et le moteur du véhicule (10) est commandé juste avant la fermeture complète de l'embrayage de telle sorte que le régime réglé du moteur du véhicule soit accru, et il est particulièrement prévu qu'
- après la fermeture complète de l'embrayage (11), le moteur du véhicule est commandé de telle sorte qu'une vitesse du véhicule et/ou une accélération du véhicule dépendante de la position de la pédale d'accélérateur soit réglée.

7. Système selon la revendication 1 ou 2,
**caractérisé en ce qu'**
en présence du premier état de fonctionnement pouvant être prédéterminé, la commande du servo-embrayage (11) s'effectue de telle sorte que l'embrayage est actionné uniquement dans le sens d'une fermeture.

8. Système selon la revendication 1 ou 2,
**caractérisé en ce qu'**
en présence du premier état de fonctionnement pouvant être prédéterminé, la commande du servo-embrayage (11) et du moteur du véhicule (10) s'effectue de telle sorte que l'embrayage n'est alors actionné dans le sens d'une ouverture que lorsque le régime enregistré du moteur du véhicule passe en dessous d'une valeur seuil (SW4).

9. Système selon la revendication 1 ou 2,
**caractérisé en ce qu'**
en présence du premier état de fonctionnement pouvant être prédéterminé, la commande du servo-embrayage (11) s'effectue en fonction du gradient (d/dt) du régime du moteur du véhicule.

10. Système selon la revendication 1 ou 2,
**caractérisé en ce qu'**
en présence du premier état de fonctionnement pouvant être prédéterminé, la commande du servo-embrayage (11) s'effectue de telle sorte que l'embrayage n'est actionné dans le sens d'une fermeture que lorsque le régime enregistré (Nmot,ist) du moteur du véhicule dépasse une valeur de seuil (Nmot2), et il est particulièrement prévu que la valeur de seuil (Nmot2) dépende de la position enregistrée (α) de la pédale d'accélérateur (14).
